(19) Europäisches Patentamt
European Patent Office
Office européen des brevets

(11) **EP 3 549 254 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **17804550.6**

(22) Anmeldetag: **27.11.2017**

(51) Int Cl.:
***H02P 6/18*** *(2016.01)*

(86) Internationale Anmeldenummer:
**PCT/EP2017/080564**

(87) Internationale Veröffentlichungsnummer:
**WO 2018/099873 (07.06.2018 Gazette 2018/23)**

(54) **VORRICHTUNG UND VERFAHREN ZUR BESTIMMUNG DER ROTORPOSITION**

DEVICE AND METHOD FOR DETERMINING THE ROTOR POSITION

DISPOSITIF ET PROCÉDÉ POUR DÉTERMINER LA POSITION DU ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2016 DE 102016123065**

(43) Veröffentlichungstag der Anmeldung:
**09.10.2019 Patentblatt 2019/41**

(73) Patentinhaber: **EBM-Papst Mulfingen GmbH&CO. KG**
**74673 Mulfingen (DE)**

(72) Erfinder:
• **KROTSCH, Jens**
**97996 Niederstetten (DE)**
• **LEY, Thomas**
**97990 Weikersheim-Laudenbach (DE)**
• **REISS, Constantin**
**74572 Blaufelden (DE)**

(74) Vertreter: **Staeger & Sperling Partnerschaftsgesellschaft mbB**
**Sonnenstraße 19**
**80331 München (DE)**

(56) Entgegenhaltungen:
**CN-A- 103 326 658     DE-T5-112012 006 220**
**US-B1- 9 325 263**

• **KIM SANG-IL ET AL: "A New Rotor Position Estimation Method of IPMSM Using All-Pass Filter on High-Frequency Rotating Voltage Signal Injection", IEEE TRANSACTIONS ON INDUSTRIAL ELECTRONICS, IEEE SERVICE CENTER, PISCATAWAY, NJ, USA, Bd. 63, Nr. 10, 1. Oktober 2016 (2016-10-01), Seiten 6499-6509, XP011622360, ISSN: 0278-0046, DOI: 10.1109/TIE.2016.2592464 [gefunden am 2016-09-09]**

**Beschreibung**

Die Erfindung betrifft eine Vorrichtung sowie ein Verfahren zur Bestimmung der Rotorposition eines EC-Motors, sowie insbesondere ein Verfahren zur geräuschreduzierten Ermittlung der Rotorposition eines EC-Motors bei oder nahe dem Stillstand des Rotors.

Aus dem Stand der Technik sind bereits diverse Verfahren bekannt, um die Lage einer Rotorwelle sensorlos zu erfassen. Aus der Druckschrift EP 1 005 716 A1 ist ein Verfahren bekannt, bei der die Drehlageabhängigkeiten von Polwicklungsinduktivitäten am Sternpunkt als Messpunkt abgegriffen werden, wobei angegeben ist, dass die Potentialschwankungen messtechnisch zur Ermittlung der Rotordrehlage anhand vorgespeicherter Zuordnungsrelationen zwischen Potential und Drehlage ausgewertet werden. Hierbei beruht die Drehlageabhängigkeit der Polwicklungsinduktivitäten auf Änderungen der Magnetisierung von Polwicklungskernen durch das Erregerfeld. Je nach relativer Anordnung von Polwicklungskernen und Erregerfeld können sich aufgrund der Abhängigkeit des für die Induktivität maßgebenden Induktionsflusses von der magnetischen Feldstärke des Erregerfeldes unterschiedlicheMagnetisierungen der Polwicklungskerne ergeben, die sich auf die Induktivität der Polwicklungen auswirken. Diese Methode verwendet sozusagen magnetische "Marker", die ein auswertbares Muster im Verlauf über eine mechanische Umdrehung erzeugen, woraus man die mechanische Position der Rotorwelle ermitteln kann.

Nachteilig sind dabei, der höhere Fertigungsaufwand und die damit verbundenen höheren Fertigungskosten. Ferner werden störende Oberwellen im Luftspalt erzeugt, die dem Optimierungsgrundsatz für Ventilatorenantriebe widerspricht, da hierdurch unerwünschte Geräusche durch ungleichmäßige Luftspaltinduktion entstehen.

Aus der DE 10 2006 046 637 A1 ist ein Verfahren bekannt, bei dem die Zustandsinformation der Ausrichtung eines ausgewählten Phasenstrangs zum Nordoder Südpol bzw., bei vielpoligen Maschinen, den Nordpolen oder Südpolen des Magnetfeldes erhalten werden. Je nach Stellung des Rotors führen Bestromungen entweder zu einer Erhöhung oder Verringerung der Induktivität des betreffenden Phasenstrangs, so dass durch die Auswertung eines von der geänderten Induktivität abhängigen Signals auf die Drehlage vor einem Nord- oder Südpol geschlossen werden kann. Eine solche Beeinflussung liegt insbesondere dann vor, wenn das Messsignal das Potential am Sternpunkt im Stern verschalteter Phasenstränge der elektrischen Maschine ist. Ferner wird eine Einrichtung vorgeschlagen, welche Spannungsimpulse an wenigstens einen der Polwicklungsphasenstränge anlegt und zur Ermittlung der Drehlage des Rotors innerhalb einer halben magnetischen Periode durch die Spannungsimpulse das am Sternpunkt der im Stern verschalteten Phasenstränge erzeugte Potential auswertet. Die vorgeschlagene Lösung der impulsförmigen Anregung innerhalb eines PWM-Taktes ist für Ventilatoranwendungen nicht geeignet, wenn aufgrund parasitärer kapazitiver Kopplungen das Messsignal fehleranfällig ist.

In der Druckschrift US 2014 0 077 738 A ist eine Lösung mit einem geringfügig erweiterten Anwendungsbereich vorgeschlagen, die aber für Motoren deren Wicklungseigenfrequenz nicht hoch genug ist, um ein vollständiges Einschwingen des Messsignals in der zur Verfügung stehenden Zeit zu gewährleisten, nicht geeignet ist. Das genannte Problem bleibt ferner vorhanden, wenn z. B. zur Reduzierung der Geräusche die PWM-Frequenz angehoben wird und sich somit die Messdauer entsprechend reduziert.

Aus den Offenbarungen DE 10 2006 046 638 A1, DE 10 2013 109 379 A1 und der EP 1 856 792 B1 sind weitere Verfahren zur Bestimmung der Rotorposition bekannt, bei der aber unerwünschte Nachteile, wie z. B. zusätzliche Messeinrichtungen, vorhanden sind.

Die DE 112012006220T offenbart einen Permanentmagnetsynchromotor mit einer auf einer Sternpunktspannungserfassung gründenden Rotorlagenschätzung.

Der Erfindung liegt deshalb die Aufgabe zugrunde, vorbesagte Nachteile zu überwinden und eine Lösung vorzuschlagen, die mit geringem Bauteilaufwand realisierbar ist und mit der eine zuverlässige und verbesserte Bestimmung der Rotorlage eines Permanentmagnet-Synchronmotors möglich ist, insbesondere wenn der Rotor steht oder sich nur langsam dreht.

Diese Aufgabe wird durch ein Verfahren nach dem unabhängigen Anspruch gelöst.

Ein Grundgedanke der vorliegenden Erfindung besteht darin, eine Information aus dem Messsignal, aus der Differenzspannung zwischen dem Sternpunkt einer Sternpunktschaltung und einem definierten Referenzpunkt als spezifische Antwortfunktion auf ein spezifisches Anregungssignal mit (maximal) einer niederfrequenten und wenigstens einer hochfrequenten Komponenten zu erhalten und dieses auszuwerten. Insbesondere kann erfindungsgemäß aus der rotorpositionsabhängigen Phasenverschiebung dieses Messsignals, der rotorpositionsabhängigen Phasenverschiebung der Einhüllenden und dem rotorpositionsabhängigen Amplitudenunterschied des erhaltenen Messsignals die Rotorlage bestimmt werden.

Erfindungsgemäß wird daher ein Verfahren zur Ermittlung der Rotorposition eines Permanentmagnet-Synchronmotors vorgeschlagen, wobei der Permanentmagnet-Synchronmotor einen Rotor und einen Stator mit drei Wicklungssträngen aufweist, die in einem Sternpunkt in Sternschaltung verbunden sind und wobei drei Wicklungsanschlüsse zum Verbinden mit einem Pulswechselrichter vorgesehen sind, sowie eine Einrichtung zur Bestimmung der Sternpunktdifferenzspannung zwischen dem Sternpunkt und einem Referenzpunkt und einer Lageermittlungseinrichtung zur Ermittlung der relativen Drehlage des Rotors aus dem aus der Sternpunktdifferenzspannung erhaltenen Messsignal als Antwort auf das Anlegen eines Anregungssignals, wobei eine Vorrichtung zum Erzeugen eines Anregungssignal vorgesehen ist, das durch eine niederfrequente Komponente und wenigstens eine hochfrequente Komponente charakterisiert ist, wobei die Lageermittlungseinrichtung die Drehlage des Rotors zumindest teilweise aus der hochfrequenten Komponente und der Einhüllenden des Messsignals ermittelt.

Das Anregungssignal stellt bevorzugt eine Anregungsspannung dar. Dabei handelt es sich um ein zur Betriebsfrequenz zusätzliches Wechselsignal (bevorzugt demnach eine Wechselspannung) dessen Frequenz oberhalb der Betriebsfequenz des Motors liegt. Besonders vorteilhaft ist ein schmalbandiges Spektrum. Dadurch kann die Anregungsfrequenz in einem für den Antrieb vorteilhaften Frequenzbereich gewählt werden, was auch in Bezug auf das Geräuschverhalten Vorteile bringt.

Besonders vorteilhaft ist es, wenn ferner eine Vorrichtung zur Messsignalaufbereitung, insbesondere zur Filterung des erhaltenen Messsignals vorgesehen ist.

Ein weiterer Aspekt der vorliegenden Erfindung betrifft ein Verfahren zur Ermittlung der Rotorposition eines Permanentmagnet-Synchronmotor, wobei an dessen Motorklemmen das besagte Anregungssignals, aufweisend eine niederfrequente Komponente und wenigstens eine hochfrequente Komponente, angelegt wird und die Drehlage des Rotors aus dem Anteil der hochfrequenten Komponente und der Einhüllenden der als Messsignal erhaltenen Antwortfunktion ermittelt wird.

In vorteilhafter Weise ist das Verfahren so ausgestaltet, dass die Frequenz der hochfrequente Komponente des Anregungssignals deutlich größer ist, d.h. näher spezifiziert wenigstens um ein Vielfaches größer ist als die Betriebsfrequenz des Permanentmagnet-Synchronmotors.

Weiter vorteilhaft ist es, wenn die Frequenz der niederfrequenten Komponente des Anregungssignals größer ist als die Betriebsfrequenz des Permanentmagnet-Synchronmotors, jedoch deutlich geringer, d. h. näher spezifiziert um ein Vielfaches geringer als die Frequenz der hochfrequente Komponente des Anregungssignals ist. In einer ebenfalls vorteilhaften Ausgestaltung der Erfindung ist vorgesehen, das Anregungssignal als Summensignal, somit als Signal mit überlagerten Signalanteilen aus wenigstens der niederfrequenten Komponente und der hochfrequente Komponente auszubilden.

Weiter vorteilhaft ist es, wenn die Anregung des Systems in vorzugsweise zwei aufeinanderfolgenden Anregungsphasen (Betriebsphasen) erfolgt, bei der in der ersten Anregungsphase das Anregungssignal wenigstens als Überlagerung aus der niederfrequenten Komponente und der hochfrequenten Komponente besteht, während in der zweiten Anregungsphase das Anregungssignal ohne die niederfrequente Komponente ausgebildet wird und daher nur noch von der hochfrequenten Komponente geprägt wird. Die hochfrequente Komponente kann unabhängig von der PWM-Frequenz so gewählt sein, dass der Abstand zur ersten Eigenfrequenz des Systems ausreichend groß ist, damit mittels, wie einer zuvor genannten Signalaufbereitung die Auswertung des Messsignals eindeutig wird.

Die Auswertung erfolgt für die hochfrequente Komponente durch Ermittlung der Phase zwischen dem hochfrequenten Anregungssignal und der Systemantwort. Unter Systemantwort ist ausschließlich die am Sternpunkt des Motors messbare Spannung zu verstehen. Als Ausgangsgröße für die Auswertung zur Rotorposition wird demzufolge die Sternpunktdifferenzspannung (in der Beschreibung der Erfindung auch als Messsignal bezeichnet) herangezogen. Sie ist die Systemantwort auf die angelegte Klemmenspannung, die das Anregungssignal darstellt.

Für das aus dem niederfrequenten und dem hochfrequent Anteil überlagerte Signal erfolgt die Auswertung durch die Ermittlung der maximalen Amplitude der Einhüllenden der Systemantwort. Die Auswertung der Rotorposition erfolgt erfindungsgemäß wenigstens durch den Schritt, dass zur Ermittlung der Rotorposition aus dem Messsignal die Erfassung der rotorpositionsabhängigen Phasenverschiebung $\Phi(\gamma)$ zwischen dem Anregungssignal und dem Messsignal erfolgt.

Die Auswertung der Rotorposition erfolgt ferner wenigstens durch den Teilschritt, dass zur Ermittlung der Rotorposition aus dem Messsignal die Erfassung der rotorpositionsabhängigen Phasenverschiebung $\psi(\gamma)$ zwischen dem Anregungssignal und der Einhüllenden des Messsignals erfolgt. Die Phasenverschiebung über der aktuellen Rotorposition kann demnach als Phasenverschiebung zwischen der niederfrequenten Anregung und der Einhüllenden der Systemantwort angesehen werden, da innerhalb einer elektrischen Umdrehung (Rotorposition) des Motors dieser Zusammenhang eine eindeutige Zuordnung zur Rotorposition erlaubt.

Ein weiterer Aspekt und Schritt betrifft die Auswertung des rotorpositionsabhängigen Amplitudenunterschieds $\Delta$ des Messsignals. Bei der Ermittlung der Rotorposition aus dem Messsignal kann daher ferner die Erfassung des rotorpositionsabhängigen Amplitudenunterschieds $\Delta$ durch Vergleich des Amplitudenmaximums ($\delta+$) und Amplitudenminimums ($\delta-$) zwischen dem Anregungssignal und dem Messsignals erfolgen, indem zunächst der Wert der Phasenverschiebung $\Phi(\gamma)$ zwischen dem Anregungssignal und dem Messsignal halbiert wird und ein Korrekturwert

$$\gamma_{korr} = \begin{cases} 0 & \forall \quad \Delta > 0 \\ \\ 180 & \forall \quad \Delta < 0 \end{cases}$$

zum Ergebnis aus der ermittelten Phase addiert wird und zwar abhängig vom Vorzeichen des Amplitudenunterschieds gebildet aus der Summe von Amplitudenmaximum (δ+) und Amplitudenminimum (δ-).

In einer weiteren vorteilhaften Ausgestaltung der Erfindung kann vorgesehen sein, zwischen der ersten und zweiten Anregungsphase (Betriebsphase) eine Übergangsphase vorgesehen ist, in der die Amplitude der niederfrequenten Komponente nicht sprunghaft, sondern allmählich, vorzugsweise kontinuierlich bis auf den Wert Null reduziert wird.

Weiter vorteilhaft ist es, wenn die Dauer der ersten Anregungsphase auf diejenige Zeitspanne begrenzt wird, die zum Zählen der Anzahl der Durchgänge der Rotorposition bei dem 0° oder 180° Phasenwinkel erforderlich ist, um die 180° Positionsungenauigkeit der Rotorposition zu beseitigen. Anders ausgedrückt bedeutet dies, dass das Einprägen eines Summensignals nur solange notwendig ist, bis die 180° Unsicherheit aufgelöst ist. Danach genügt für die Positionsermittlung das Einprägen mittels des hochfrequenten Anregungssignals. Nach dem Abschalten der niederfrequenten Komponente kann durch Erfassen der Winkelentwicklung oder durch das Zählen der vom Rotor durchlaufenen 180°-Bereiche, die Kenntnis über die eindeutige Auflösung der 180°-Positionsungenauigkeit, aufrecht erhalten werden.

Eine weitere Kurvenverlaufsform kann dabei auch schon auf die ansteigende Form der niederfrequenten Amplitude angewandt werden. Diese steigt dann langsam an, wird gehalten bis die 180° Unsicherheit aufgelöst ist und wird dann allmählich, vorzugsweise kontinuierlich wieder abgesenkt. Diese Maßnahme kann auch in sich wiederholenden Intervallen erfolgen, um die richtige Kommutierung eines Antriebs zu überwachen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig. 1     beispielhafter Verlauf eines niederfrequenten und hochfrequenten Anregungssignals;

Fig. 2     beispielhafte Verläufe eines niederfrequenten und hochfrequenten Anregungssignals als überlagertes Anregungssignal,

Fig. 3     eine Ansicht einer Anregungssignals zusammen mit einem Messsignal und deren Phasenverschiebung;

Fig. 4     Ansicht, die den Zusammenhang von Rotorposition zur Phasenverschiebung aus dem HF-Anteil darstellt;

Fig. 5     eine Ansicht mit einem Anregungssignal und einem Auswertungssignal und deren Einhüllenden;

Fig. 6     die Darstellung der rotorpositionsabhängigen Phasenverschiebung der Einhüllenden;

Fig. 7a,b  Ansichten die den Zusammenhang zwischen Rotorposition auf das Messsignal bei dem Phasenwinkel von 0° und 180° zeigen;

Fig. 8     schematische Darstellungen zur Korrekturwertermittlung;

Fig. 9     Ansicht einer zweistufigen Anregung;

Fig. 10    Ansicht einer alternativen Ausgestaltung einer zweistufigen Anregung und

Figur 11   ein erfindungsgemäßer Permanentmagnet-Synchronmotor in schematischer Darstellung.

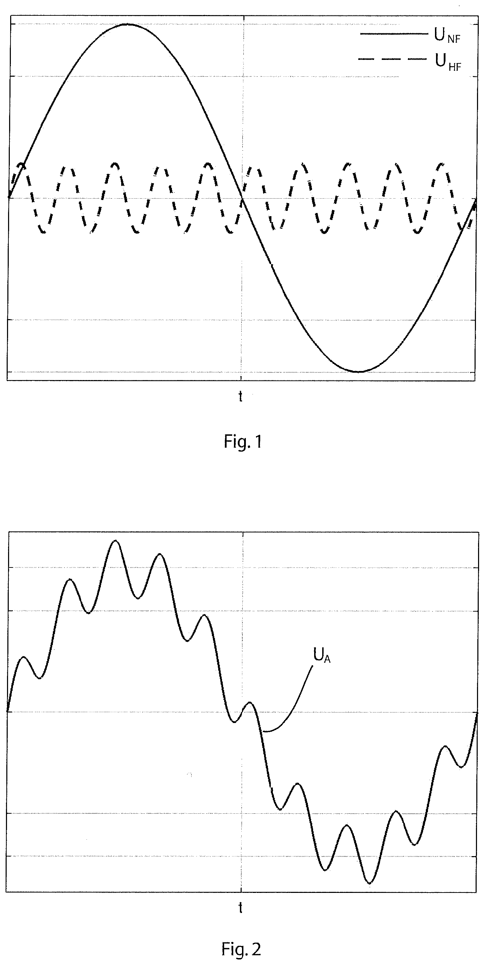

Die Erfindung wird im Folgenden anhand von Ausführungsformen mit Bezug auf die Figuren 1 bis 11 näher erläutert, wobei gleiche Bezugszeichen auf gleiche strukturelle und/oder funktionale Merkmale hinweisen.

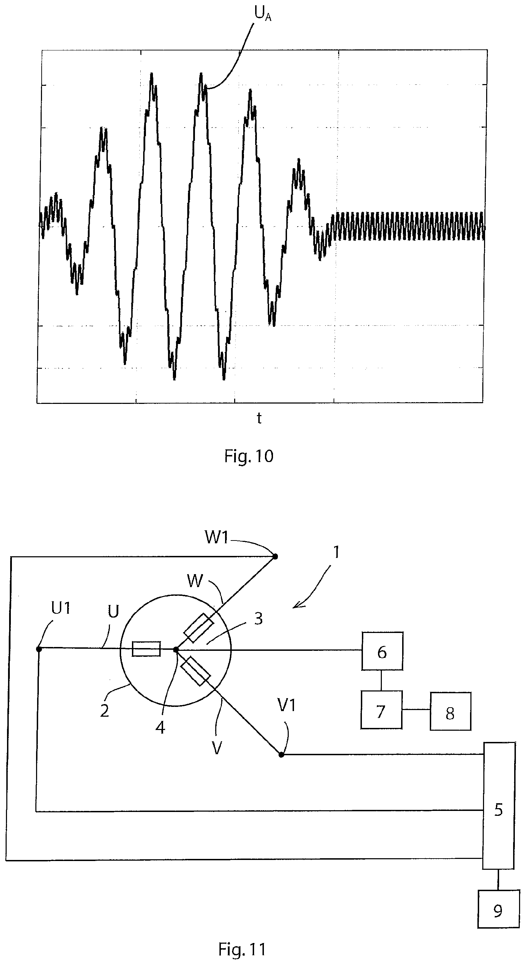

Das erfindungsgemäße Verfahren wird mit Bezug auf die Figuren 1 bis 10 erläutert, das bei einem Permanentmagnet-Synchronmotor 1 gemäß der schematischen Ansicht der Figur 11 angewendet werden kann.

Der Permanentmagnet-Synchronmotor 1 ist mit einem Rotor 2 und einem Stator 3 mit drei Wicklungssträngen U, V, W ausgebildet, die in einem Sternpunkt 4 in Sternschaltung verbunden sind. Ferner sind drei Wicklungsanschlüsse U1, V1, W1 zum Verbinden mit einem Pulswechselrichter 5 vorgesehen.

Darüber hinaus ist eine Einrichtung 6 zur Bestimmung der Sternpunktdifferenzspannung zwischen dem Sternpunkt 4 und einem Referenzpunkt vorgesehen sowie eine Lageermittlungseinrichtung 8 zur Ermittlung der relativen Drehlage des Rotors 2 aus dem, aus der Sternpunktdifferenzspannung erhaltenen Messsignal $U_{SN}$ als Antwort auf das Anlegen eines Anregungssignals $U_A$.

Zum Erzeugen des Anregungssignal $U_A$ ist eine Vorrichtung 9 vorgesehen, die ein Signal $U_A$ erzeugen kann, das durch eine niederfrequente Komponente NF und eine hochfrequente Komponente HF charakterisiert ist. Die Figur 1 zeigt dabei jeweils den beispielhaften Verlauf eines niederfrequenten Anregungssignals $U_{NF}$ (durchgezogene Kurve) und eines hochfrequenten Anregungssignals $U_{HF}$ (gestrichelte Kurve).

In der Figur 2 ist der Verlauf eines Anregungssignals $U_A$ als Summensignal $U_{NF} + U_{HF}$, somit ein daraus überlagertes Signal mit einer niederfrequenten Komponente NF und hochfrequenten Komponente HF gezeigt.

Die Lageermittlungseinrichtung 8 ist ausgebildet die Drehlage des Rotors 2 aus dem Anteil der hochfrequenten Komponente HF und der Einhüllenden UE

des Messsignals U$_{SN}$ zu ermitteln.

Ferner ist eine Vorrichtung 7 zur Messsignalaufbereitung, insbesondere zur Filterung des Messsignals U$_{SN}$ vorgesehen ist.

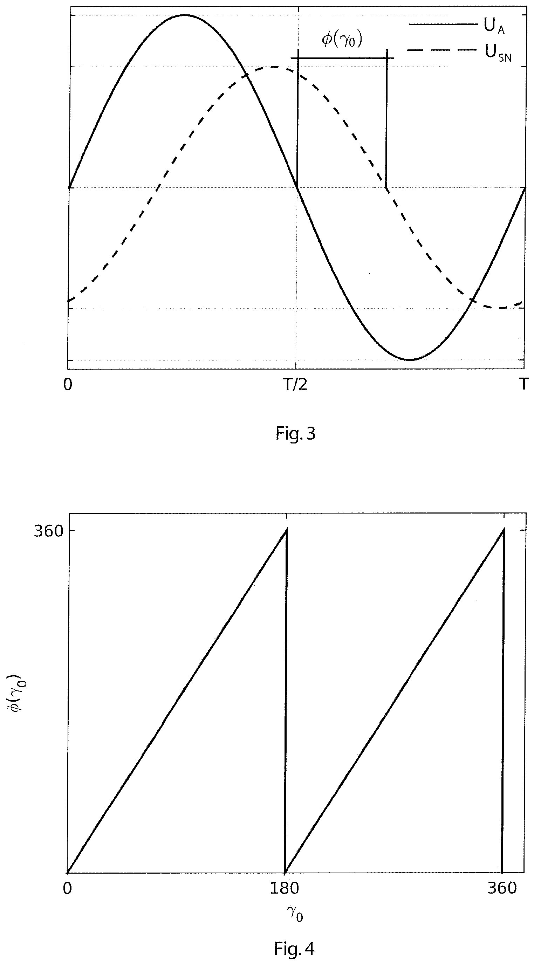

Die Fig. 3 zeigte eine Ansicht eines Anregungssignals U$_A$ zusammen mit einem Messsignal U$_{SN}$ und der Phasenverschiebung $\Phi(\gamma)$ zwischen dem Anregungssignal U$_A$ und dem Messsignal U$_{SN}$. Die Phasenverschiebung $\Phi(\gamma)$ kann beispielsweise durch Vergleich des Zeitverhältnisses der Nulldurchgänge oder Extremwerte zur Periodendauer, Phasenregler oder durch Fourier-Analyse bestimmt werden. Es wiederholt sich der Verlauf von $\Phi(\gamma)$ innerhalb einer elektrischen Rotordrehung zwei Mal wodurch die Ermittlung der Rotorposition zunächst noch nicht eindeutig ist, wie sich dies aus der Ansicht der Figur 4 ergibt. Diese zeigt den Zusammenhang von Rotorposition zur Phasenverschiebung $\Phi(\gamma)$ aus der hochfrequenten Komponente HF.

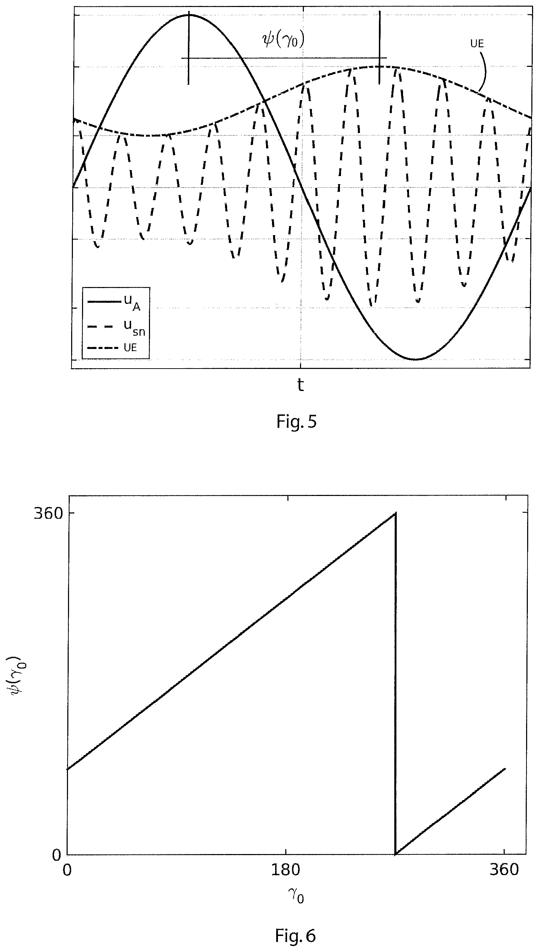

Die rotorpositionsabhängige Phasenverschiebung $\psi(\gamma)$ zwischen dem Anregungssignal U$_A$ und der Einhüllenden UE des Messsignals ist in der Fig. 5 dargestellt und zwar als Phasenverschiebung $\psi(\gamma)$ zwischen der niederfrequenten Anregung und der Einhüllenden der Systemantwort.

Innerhalb einer elektrischen Umdrehung (Rotorposition) des Motors besteht der Zusammenhang wie beispielhaft in Fig. 6 dargestellt, der dann eine eindeutige Zuordnung zur Rotorposition erlaubt.

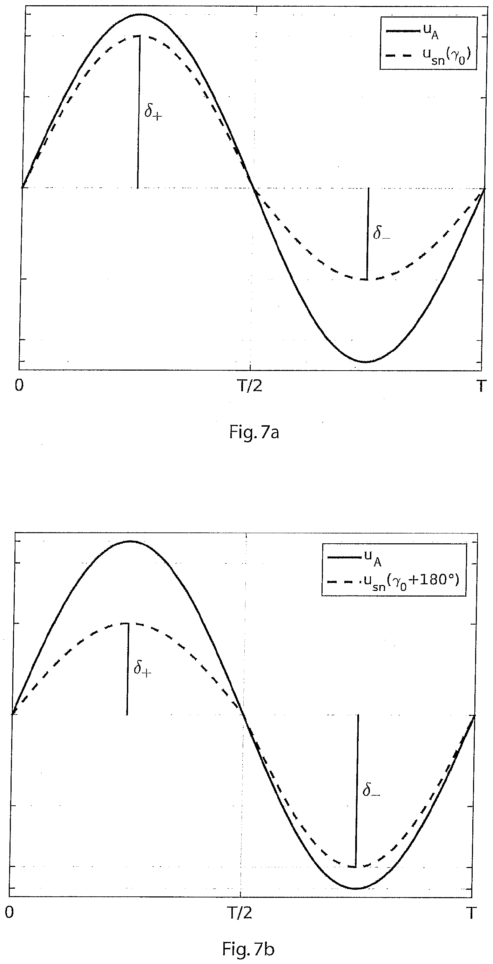

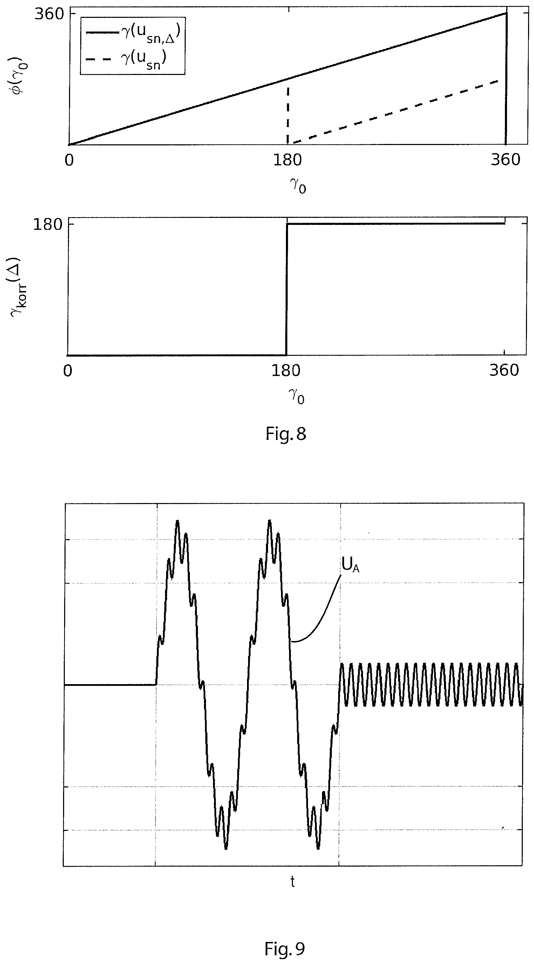

Mit Bezug auf die Figuren 7a, 7b und 8 wird die Auswertung des rotorpositionsabhängigen Amplitudenunterschieds $\Delta$ des Messsignals U$_{SN}$ erläutert. In den Figuren 7a und 7b sind hierzu Ansichten gezeigt, die den Zusammenhang zwischen Rotorposition auf das Messsignal bei dem Phasenwinkel von 0° (Fig. 7a) und 180° (Fig. 7b) zeigen. Die Figur 8 zeigt eine schematische Darstellung zur Korrekturwertermittlung. Bei der Ermittlung der Rotorposition aus dem Messsignal wird hier die Erfassung des rotorpositionsabhängigen Amplitudenunterschieds $\Delta$ durch Vergleich des Amplitudenmaximums ($\delta+$) und Amplitudenminimums ($\delta-$) zwischen dem Anregungssignal U$_A$ und dem Messsignal U$_{SN}$ vorgenommen, indem zunächst der Wert der Phasenverschiebung $\Phi(\gamma)$ zwischen dem Anregungssignal U$_A$ und dem Messsignal U$_{SN}$ halbiert wird und ein Korrekturwert

$$\gamma_{korr} = \begin{cases} 0 & \forall \quad \Delta > 0 \\ 180 & \forall \quad \Delta < 0 \end{cases}$$

zum Ergebnis aus der ermittelten Phase addiert wird und zwar abhängig vom Vorzeichen des Amplitudenunterschieds $\Delta$ gebildet aus der Summe von Amplitudenmaximum $\delta+$ und Amplitudenminimum $\delta-$.

Die Figuren 9 und 10 zeigen alternative Ausführungen einer beispielhaften zweistufigen Anregung mit einer ersten und zweiten Betriebsphase, wobei in der Figur 9 das Anregungssignal U$_A$ als Summensignal aus dem niederfrequenten und hochfrequenten Anregungssignal für zwei Perioden gewählt ist.

In der Figur 10 steigt der Anteil der niederfrequenten Komponente NF im Anregungssignal U$_A$ zunächst an, um dann allmählich wieder abzuklingen.

Bei der vorliegenden Erfindung wird lediglich eine Differenzspannungsmessung benötigt, die keine Strommessung erfordert und somit mit einen geringeren Aufwand die Rotorlage erfasst werden kann. Es wird ebenfalls keine magnetische Anisotropie des Rotors benötigt und das Verfahren ist geeignet für die Verwendung von Motoren, die eine Wicklungseigenfrequenz ausbilden, die nicht wesentlich von der PWM-Frequenz des Pulswechselrichters verschieden ist, an dem der Motor betrieben wird.

**Patentansprüche**

1. Verfahren zur Ermittlung der Rotorposition eines Permamentmagnet-Synchronmotors (1) mit einem Rotor (2) und einem Stator (3) mit drei Wicklungsträngen (U, V, W), die in einem Sternpunkt (4) in Sternschaltung verbunden sind und wobei drei Wicklungsanschlüsse (U1, V1, W1) zum Verbinden mit einem Pulswechselrichter (5) vorgesehen sind, sowie eine Einrichtung (6) zur Bestimmung der Sternpunktdifferenzspannung zwischen dem Sternpunkt (4) und einem Referenzpunkt und einer Lageermittlungseinrichtung (8) zur Ermittlung der relativen Drehlage des Rotors (2) aus dem aus der Sternpunktdifferenzspannung erhaltenen Messsignal (U$_{SN}$), **dadurch gekennzeichnet, daß** das Messsignal die Antwort auf das Anlegen eines Anregungssignals (U$_A$) ist, wobei eine Vorrichtung (9) zum Erzeugen des Anregungssignals (U$_A$), das durch eine temporär niederfrequente Komponente (NF) und wenigstens eine temporär hochfrequente Komponente (HF) charakterisiert ist, vorgesehen wird, wobei durch die Lageermittlungseinrichtung die Drehlage des Rotors (2) aus der hochfrequenten Komponente (HF) und der Einhüllenden (UE) des Messsignals (U$_{SN}$) ermittelt wird, wobei an den Motorklemmen das Anregungssignal (U$_A$) mit einer niederfrequenten Komponente (NF) und wenigstens einer hochfrequenten Komponente (HF) angelegt wird und die Drehlage des Rotors (2) aus der hochfrequenten Komponente (HF) und der Einhüllenden (UE) der als Messsignal (U$_{SN}$) erhaltenen Systemantwort ermittelt wird und wobei die Frequenz der hochfrequenten Komponente (HF) des Anregungssignals (U$_A$) wenigstens um ein Vielfaches größer ist als die Betriebsfrequenz des Permanentmagnet-Synchronmotors (1), wobei die Ermittlung der Rotorposition aus dem Messsignal (U$_{SN}$) wenigstens durch Erfassung der rotorpositionsabhängigen Phasenverschiebung $\Phi(\gamma)$ zwischen dem Anregungssignal und dem Messsignal erfolgt.

**2.** Verfahren nach Anspruch 1, **dadurch gekennzeichnet, dass** eine Vorrichtung (7) zur Messsignalaufbereitung, insbesondere zur Filterung des Messsignals ($U_{SN}$) vorgesehen wird.

**3.** Verfahren nach Anspruch 1 oder 2, wobei die Frequenz der niederfrequenten Komponente (NF) des Anregungssignals ($U_A$) größer ist als die Betriebsfrequenz des Permanentmagnet-Synchronmotors (1), jedoch um ein Vielfaches geringer als die Frequenz der hochfrequenten Komponente (HF) des Anregungssignals ($U_A$).

**4.** Verfahren nach einem der vorhergehenden Ansprüche, wobei das Anregungssignal ($U_A$) als Summensignal aus wenigstens der niederfrequenten Komponente (NF) und der hochfrequenten Komponente (HF) zusammengesetzt ist.

**5.** Verfahren nach einem der vorhergehenden Ansprüche, wobei die Ermittlung der Rotorposition aus dem Messsignal ($U_{SN}$) wenigstens durch Erfassung der rotorpositionsabhängigen Phasenverschiebung $\psi(\gamma)$ zwischen dem Anregungssignal und der Einhüllenden des Messsignals ($U_{SN}$) erfolgt.

**6.** Verfahren nach einem der vorhergehenden Ansprüche 4 oder 5, wobei die Ermittlung der Rotorposition aus dem Messsignal ($U_{SN}$) ferner durch Erfassung des rotorpositionsabhängigen Amplitudenunterschieds $\Delta$ durch Vergleich des Amplitudenmaximums ($\delta+$) und Amplitudenminimums ($\delta-$) zwischen dem Anregungssignal und dem Messsignals ($U_{SN}$) erfolgt, indem zunächst der Wert der Phasenverschiebung $\Phi(\gamma)$ zwischen dem Anregungssignal und dem Messsignal halbiert wird und ein Korrekturwert

$$\gamma_{korr} = \begin{cases} 0 & \forall \quad \Delta > 0 \\ 180 & \forall \quad \Delta < 0 \end{cases}$$

zum Ergebnis aus der ermittelten Phase addiert wird und zwar abhängig vom Vorzeichen des Amplitudenunterschieds gebildet aus der Summe von Amplitudenmaximum ($\delta+$) und Amplitudenminimum ($\delta-$).

**7.** Verfahren nach einem der vorhergehenden Ansprüche, wobei die Anregung in vorzugsweise zwei aufeinanderfolgenden Anregungsphasen erfolgt, bei der in der ersten Anregungsphase das Anregungssignal ($U_A$) wenigstens als Überlagerung aus der niederfrequenten Komponente (NF) und der hochfrequente Komponente (HF) besteht, während in der zweiten Anregungsphase das Anregungssignal ohne die niederfrequente Komponente ausgebildet ist.

**8.** Verfahren nach Anspruch 7, wobei zwischen der ersten und zweiten Anregungsphase eine Übergangsphase vorgesehen ist, in der die Amplitude der niederfrequenten Komponente (NF) allmählich, vorzugsweise kontinuierlich bis auf den Wert Null reduziert wird.

**9.** Verfahren nach Anspruch 7 oder 8, wobei die Dauer der ersten Anregungsphase auf eine Zeitdauer begrenzt wird, bei der die Anzahl der Durchgänge der Rotorposition bei dem 0° oder 180° Phasenwinkel ermittelt wird, um daraus die 180° Positionsungenauigkeit der Rotorposition aufzulösen und wobei nach dem Abschalten der niederfrequenten Komponente (NF) durch Erfassen der Winkelentwicklung oder durch das Zählen der vom Rotor durchlaufenen 180°-Bereiche, die Kenntnis über die eindeutige Auflösung der 180°-Positionsungenauigkeit erfolgt.

**Claims**

**1.** A method for determining the rotor position of a permanent magnet synchronous motor (1) with a rotor (2) and a stator (3) with three winding strands (U, V, W) which are connected at a star point (4) in a star connection, and wherein three winding connections (U1, V1, W1) for connecting to a pulse inverter (5) are provided, as well as a device (6) for determining the star point differential voltage between the star point (4) and a reference point and a position determination device (8) for determining the relative rotation position of the rotor (2) from the measurement signal ($U_{SN}$) obtained from the star point differential voltage, **characterised in that** the measurement signal is the response to applying an excitation signal ($U_A$), wherein a device (9) for generating the excitation signal ($U_A$), which is **characterised by** a temporarily low-frequency component (NF) and at least one temporarily high-frequency component (HF), is provided, wherein the rotation position of the rotor (2) is determined from the high-frequency component (HF) and the envelope (UE) of the measurement signal ($U_{SN}$) by the position determination device, wherein the excitation signal ($U_A$) with a low-frequency component (NF) and at least one high-frequency component (HF) is applied to the motor clamps, and the rotation position of the rotor (2) is determined from the high-frequency component (HF) and the system response obtained from the envelope (UE) of the measurement signal ($U_{SN}$), and wherein the frequency of the high-frequency component (HF) of the excitation signal ($U_A$) is several times greater than the operating frequency of the permanent magnet synchronous motor (1), wherein the determination of the rotor position from the measurement signal ($U_{SN}$) occurs at least by acquisition of the rotor position-dependent phase shift $\Phi(\gamma)$ between the excitation signal and the measurement signal.

2. The method according to claim 1, **characterised in that** a device (7) for the measurement signal processing, in particular for the filtering of the measurement signal (USN) is provided.

3. The method according to claim 1 or 2, wherein the frequency of the low-frequency component (NF) of the excitation signal ($U_A$) is greater than the operating frequency of the permanent magnet synchronous motor (1) but several times lower than the frequency of the high-frequency component (HF) of the excitation signal ($U_A$).

4. The method according to any one of the preceding claims, wherein the excitation signal ($U_A$) as sum signal is composed of at least the low-frequency component (NF) and the high-frequency component (HF).

5. The method according to any one of the preceding claims, wherein the determination of the rotor position from the measurement signal ($U_{SN}$) occurs at least by acquisition of the rotor position-dependent phase shift $\psi(\gamma)$ between the excitation signal and the envelope of the measurement signal ($U_{SN}$).

6. The method according to either of the preceding claim 4 or 5, wherein the determination of the rotor position from the measurement signal ($U_{SN}$) furthermore occurs by acquisition of the rotor position-dependent amplitude difference $\Delta$ by comparison of the amplitude maximum ($\delta+$) and amplitude minimum ($\delta-$) between the excitation signal and the measurement signal ($U_{SN}$), in that first the value of the phase shift $\Phi(\gamma)$ between the excitation signal and the measurement signal is halved and a correction value

$$\gamma_{corr} = \begin{cases} 0 & \forall \quad \Delta > 0 \\ 180 & \forall \quad \Delta < 0 \end{cases}$$

is added to the result from the determined phase and in particular independently of the sign of the amplitude difference formed from the sum of amplitude maximum ($\delta+$) and amplitude minimum ($\delta-$).

7. The method according to any one of the preceding claims, wherein the excitation preferably occurs in two successive excitation phases, in which, in the first excitation phase, the excitation signal ($U_A$) consists at least as superposition of the low-frequency component (NF) and the high-frequency component (HF), while in the second excitation phase the excitation signal is formed without the low frequency component.

8. The method according to claim 7, wherein between the first and second excitation phases, a transition phase is provided, in which the amplitude of the low-frequency component (NF) is reduced gradually, preferably continuously, to the zero value.

9. The method according to claim 7 or 8, wherein the duration of the first excitation phase is limited to a time period in which the number of the passes of the rotor position through the 0° or 180° phase angle is determined, in order to resolve therefrom the 180° position inaccuracy of the rotor position, and wherein, after switching off the low-frequency component (NF) by acquisition of the angle development or by counting the 180° regions passed through by the rotor, the knowledge concerning the explicit resolution of the 180° position inaccuracy results.

**Revendications**

1. Procédé de détermination de la position du rotor d'un moteur synchrone à aimants permanents (1) avec un rotor (2) et un stator (3) à trois phases d'enroulement (U, V, W) qui sont connectées à un point neutre (4) en un circuit en étoile et dans lequel trois raccords d'enroulement (U1, V1, W1) sont prévus pour la connexion à un onduleur à impulsions (5), ainsi qu'un dispositif (6) pour déterminer la tension différentielle du point neutre entre le point neutre (4) et un point de référence et un dispositif de détermination de position (8) pour déterminer la position de rotation relative du rotor (2) à partir du signal de mesure obtenu à partir de la tension différentielle du point neutre ($U_{SN}$), **caractérisé en ce que** le signal de mesure est la réponse à l'application d'un signal d'excitation ($U_A$), dans lequel un dispositif (9) est prévu pour générer le signal d'excitation ($U_A$) qui est **caractérisé par** une composante temporairement basse fréquence (NF) et au moins une composante temporairement haute fréquence (HF), dans lequel la position de rotation du rotor (2) est déterminée par le dispositif de détermination de position à partir de la composante haute fréquence (HF) et de l'enveloppe (UE) du signal de mesure ($U_{SN}$), dans lequel le signal d'excitation ($U_A$) est appliqué avec une composante basse fréquence (NF) et au moins une composante haute fréquence (HF) aux bornes du moteur et la position de rotation du rotor (2) est déterminée à partir de la composante haute fréquence (HF) et de l'enveloppe (UE) de la réponse du système reçue en tant que signal de mesure ($U_{SN}$) et dans lequel la fréquence de la composante haute fréquence (HF) du signal d'excitation ($U_A$) est au moins plusieurs fois supérieure à la fréquence de fonctionnement du moteur synchrone à aimants permanents (1), dans lequel la position du rotor est déterminée à partir du signal de mesure ($U_{SN}$) au moins par la détection du déphasage en fonction de la position du rotor $\Phi(\gamma)$ entre le signal d'excitation et le signal de mesure.

2. Procédé selon la revendication 1, **caractérisé en ce qu'**un dispositif (7) est prévu pour traiter le signal de mesure, en particulier pour filtrer le signal de mesure ($U_{SN}$).

3. Procédé selon la revendication 1 ou 2, dans lequel la fréquence de la composante basse fréquence (NF) du signal d'excitation ($U_A$) est supérieure à la fréquence de fonctionnement du moteur synchrone à aimants permanents (1), mais est plusieurs fois inférieure à la fréquence de la composante haute fréquence (HF) du signal d'excitation ($U_A$).

4. Procédé selon l'une des revendications précédentes, dans lequel le signal d'excitation ($U_A$) est composé comme un signal de somme d'au moins la composante basse fréquence (NF) et la composante haute fréquence (HF).

5. Procédé selon l'une des revendications précédentes, dans lequel la position du rotor est déterminée à partir du signal de mesure ($U_{SN}$) au moins par la détection du déphasage en fonction de la position du rotor $\Psi(\gamma)$ entre le signal d'excitation et l'enveloppe du signal de mesure ($U_{SN}$).

6. Procédé selon l'une des revendications 4 ou 5 précédentes, dans lequel la position du rotor est déterminée à partir du signal de mesure ($U_{SN}$) en outre par la détection de la différence d'amplitude $\Delta$ en fonction de la position du rotor par comparaison de l'amplitude maximale ($\delta+$) et de l'amplitude minimale ($\delta-$) entre le signal d'excitation et le signal de mesure ($U_{SN}$) en ce que la valeur du déphasage $\Phi(\gamma)$ entre le signal d'excitation et le signal de mesure est d'abord divisée par deux et une valeur de correction

$$\gamma_{korr} = \begin{cases} 0 & \forall \quad \Delta > 0 \\ 180 & \forall \quad \Delta < 0 \end{cases}$$

est ajoutée au résultat de la phase déterminée, en fonction du signe de la différence d'amplitude formée à partir de la somme de l'amplitude maximale ($\delta+$) et de l'amplitude minimale ($\delta-$).

7. Procédé selon l'une des revendications précédentes, dans lequel l'excitation a lieu de préférence en deux phases d'excitation successives, dans lesquelles, dans la première phase d'excitation, le signal d'excitation ($U_A$) consiste au moins en une superposition de la composante basse fréquence (NF) et de la composante haute fréquence (HF), tandis que dans la seconde phase d'excitation, le signal d'excitation est formé sans la composante basse fréquence.

8. Procédé selon la revendication 7, dans lequel une phase de transition est prévue entre la première et la seconde phase d'excitation, phase de transition dans laquelle l'amplitude de la composante basse fréquence (NF) est réduite progressivement, de préférence en continu, jusqu'à la valeur zéro.

9. Procédé selon la revendication 7 ou 8, dans lequel la durée de la première phase d'excitation est limitée à une période de temps dans laquelle le nombre de passages de la position du rotor à l'angle de phase de 0° ou 180° est déterminé afin de résoudre à partir de celui-ci l'imprécision de position à 180° de la position du rotor et dans lequel, après la désactivation de la composante basse fréquence (NF), la connaissance de la résolution nette de l'imprécision de position à 180° a lieu par l'acquisition du développement angulaire ou par le comptage des zones à 180° parcourues par le rotor.

Fig. 1

Fig. 2

Fig. 3

Fig. 4

Fig. 5

Fig. 6

Fig. 7a

Fig. 7b

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1005716 A1
- DE 102006046637 A1
- US 20140077738 A
- DE 102006046638 A1
- DE 102013109379 A1
- EP 1856792 B1
- DE 112012006220T